# EUROPEAN PATENT APPLICATION

(11) **EP 2 426 942 A2**
(43) Date of publication of application: **07.03.2012**
(21) Application number: 11179519.1
(22) Date of filing: 31.08.2011
(51) Int. Cl.: H04N 21/472, H04L 29/08, H04N 21/61

(54) **System and method for providing electronic content or services in a telecommunications system**

(30) Priority: 01.09.2010 US 873385
(71) Applicant: Telefonaktiebolaget LM Ericsson (publ), 164 83 Stockholm (SE)
(72) Inventor: Connor, Brenda Ann, College Station, TX Texas 77840 (US); Cook-Hellberg, Karen, Plano, TX Texas 75074 (US)
(74) Representative: HOFFMANN EITLE

(57) **Abstract**

A system, method, and node for providing an end-user device with access to an operator's service capability through a third-party provider. The system increases sales of Video-On-Demand (VOD) content stored in a telecommunication operator network by enabling a third-party supplier to retrieve a catalog of the VOD content stored in the operator network, and to sell videos from the retrieved catalog to end-user devices. When the third-party supplier receives a request from a wireless end-user device to purchase a video from the catalog, the third-party supplier notifies the operator network, which then delivers the video to the wireless end-user device. The third-party supplier may pay a fee to the operator network for each video sold.

## Description

### CROSS-REFERENCE TO RELATED APPLICATIONS: NOT APPLICABLE

### STATEMENT REGARDING FEDERALLY SPONSORED RESEARCH OR DEVELOPMENT: NOT APPLICABLE

### REFERENCE TO SEQUENCE LISTING, A TABLE, OR A COMPUTER PROGRAM LISTING COMPACT DISC APPENDIX: NOT APPLICABLE

### BACKGROUND

The present invention relates to communications networks. More particularly, and not by way of limitation, the present invention is directed to a system and method for providing electronic content or services through a third party supplier in a telecommunications network.

With the increased popularity of the internet, more enhanced services are becoming available to end-users. There are many innovative developers providing niche services to customers. However, these current niche services are not available through wireless networks. Existing service capabilities on the wireless side currently focus on business-to-consumer (B2C) services for wireless networks, such as messaging and location determination services. However, there are many niche services available on the wireline side of the Internet that are not currently available via wireless communication devices. Many of these niche services are provided by Over-the-Top (OTT) service providers having a large base of subscribers. An OTT service is one in which users download or stream content from third parties rather than using their service provider's service, for example Video-On-Demand (VOD). The term "over the top" is used because the service runs over the top of an existing broadband service and is not controlled by the service provider. However, because the wireless communication devices are not exposed to these niche video services, service carriers are removed from lucrative revenue opportunities in these service domains.

Niche service providers use exposed service capabilities to create services targeted at customer niches. Currently, exposure of service capabilities in wireless networks is standardized by the ParlayX group and provides limited services, such as Short Message Service/Multimedia Messaging Service (SMS/MMS) services, and location determination services.

Additionally, third-party suppliers cannot access operator network services such as VOD services within telecommunication operator networks to ascertain what VOD content is available there. Many of these third-party suppliers have their own customer base, but cannot offer them videos stored within an operator network.

### SUMMARY

The present invention enables selected items, such as electronic content or services to be provided through a third-party supplier in a telecommunications network. Services may be delivered to mobile environments such as Long Term Evolution (LTE) networks, through an Over-The-Top (OTT) service provider that uses the operator's service capabilities.

In one embodiment, the present invention is directed to a method of increasing sales of Video-On-Demand (VOD) content stored in a telecommunication operator network. A third-party supplier is provided access to the VOD services in the operator network, and is able to retrieve a catalog of the VOD content stored in the operator network. The third-party supplier then sells videos from the retrieved catalog to end-user devices.

In another embodiment, the present invention is directed to a method in a telecommunication network for providing an end-user device with access to an identified item. In the method, a third-party supplier, separate from an operator network, receives a request from the end-user device to purchase an item selected from a list of items stored in the operator network. The third-party supplier forwards the request from the third-party supplier to the operator network. The request identifies the selected item and the end-user device. If the selected item is available, the selected item is streamed or downloaded from the operator network to the end-user device.

In another embodiment, the invention is directed to a system in a telecommunication network for providing an end-user device with access to an identified item. The system includes an application server operating in an operator network for receiving a request through a third-party supplier from the end-user device to purchase an item selected from a list of items stored in the operator network. The application server forwards the request from the third-party supplier. The request identifies the selected item and the end-user device. In addition, the selected item is streamed or downloaded from the operator network to the end-user device if the item is available.

In another embodiment, the invention is directed to a node in a telecommunication network for providing an end-user device with access to an identified item. The node receives requests of a selected item for a list of items stored in an operator network through a third-party provider from an end-user device. The node forwards the request from the third-party supplier to the operator network. The request identifies the selected item and the end-user device. The selected item is then streamed or downloaded from the operator network to the end-user device if the item is available.

### BRIEF DESCRIPTION OF THE DRAWINGS

In the following section, the invention will be described with reference to exemplary embodiments illustrated in the figures, in which:

FIG. 1 is a simplified block view of video service exposure in a telecommunications system in an exemplary embodiment of the present invention;

FIG. 2 is a signaling diagram illustrating messaging for obtaining a catalog in an exemplary embodiment of the present invention;

FIG. 3 is a signaling diagram illustrating messaging for selecting and purchasing video OTT in another exemplary embodiment of the present invention;

FIG. 4 is a simplified block diagram illustrating components utilized in Longtail video service enablement in an exemplary embodiment of the present invention;

FIGs. 5A-5B are flowcharts illustrating the steps of an exemplary method of providing an end-user device with access to an identified item in a telecommunications network; and

FIG. 6 is a flowchart illustrating the steps of an exemplary method of increasing sales of VOD content stored in a telecommunication operator network.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

The present invention is a system and method system for providing electronic content or service to an end-user device through a third-party supplier in a telecommunications network.

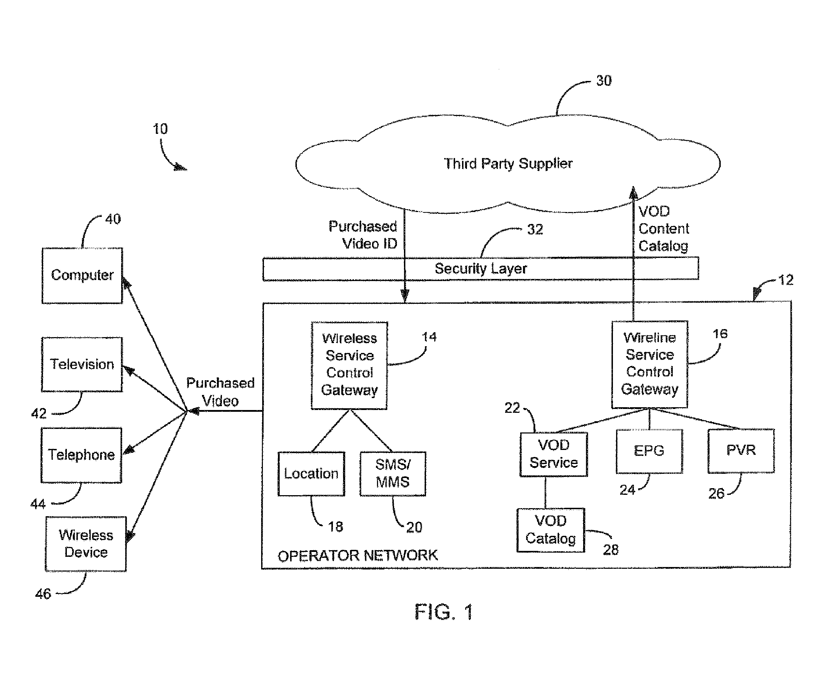

FIG. 1 is a simplified block view of video service exposure in a telecommunications system 10 in an exemplary embodiment of the present invention. The system 10 includes a telecommunication operator network 12 having a wireless Service Control Gateway (SCG) 14 and a wireline SCG 16. The wireless SCG 14 currently provides location services 18 and SMS/MMS services 20. However, in the present invention, the wireless SCG 14 facilitates the download or streaming of content (e.g., videos) to a wireless end-user device. The wireline SCG 16 provides Video-On-Demand (VOD) services 22, an Electronic Program Guide (EPG) 24, a Personnel Video Recorder Management (PVR) 26, and VOD catalog services 28. The third-party supplier 30 is separated from the telecommunications network 12 by a security layer 32 controlled by the SCGs. The telecommunications network provides various services to end-user devices, such as a computer 40, a television 42 and a phone 44.

Currently, the wireline SCG 16 provides relevant video service capabilities which include, but are not limited to, exposure of VOD services 22, an EPG 24 and a PVR 26. Additionally, in the present invention, the wireline SCG 16 provides content (e.g., video content) available in the operator network 12 to the third-party supplier 30. The VOD services may include the capability to purchase a program, retrieve catalogs, retrieve purchase data and view rental history of the user. The channel management EPG enables the user to fetch end-user subscribed channels, fetch data of subscribed channels, and fetch the end-user currently watched channel. The PVR enables the scheduling of a new recording of a program, listing the recorded programs and deleting a recorded program.

The wireline SCG 16 provides policy control, throttling control and charging to protect an operator's network while enabling an external application (i.e., third-party supplier) use of operator assets in innovative services. Currently, the computer 40, television 42, and telephone 44 may access services provided by the third-party supplier 30 via Uniform Resource Identifier (URL) or a downloaded client or widget. The third-party supplier may utilize a Longtail niche application, which accesses the Service Control Gateway via URL (REST) or communicates via web service. In business, "Longtail" refers to those goods or services that don't sell in the volume that popular goods and services do. Thus, a graph of a sales curve would trail off in a long tail for those items that sell less and less. Businesses can still make money off of them, but usually not as much. The rule of thumb for retail is that 80% of their revenue comes from 20% of their inventory. The Internet is changing that for some businesses since they are not as constrained by inventory space, and they can make less popular items as readily available as the popular ones. Hence, the present invention is particularly useful in providing these Longtail niche services. However, the present invention is not limited to merely Longtail niche services may be used to provide any selected item, which may be electronic content or downloaded service.

In one embodiment, the third-party supplier 30 retrieves a catalog of VOD content from the operator network 12. The third-party supplier may then offer videos from the catalog for sale to the third-party supplier's customers. When a video is purchased, the third-party supplier notifies the operator network, which then delivers the purchased video to the customer device, which may be, for example, the computer 40, the television 42, the telephone 44, or the wireless device 46. The third-party supplier may pay a fee to the operator for each video sold and delivered.

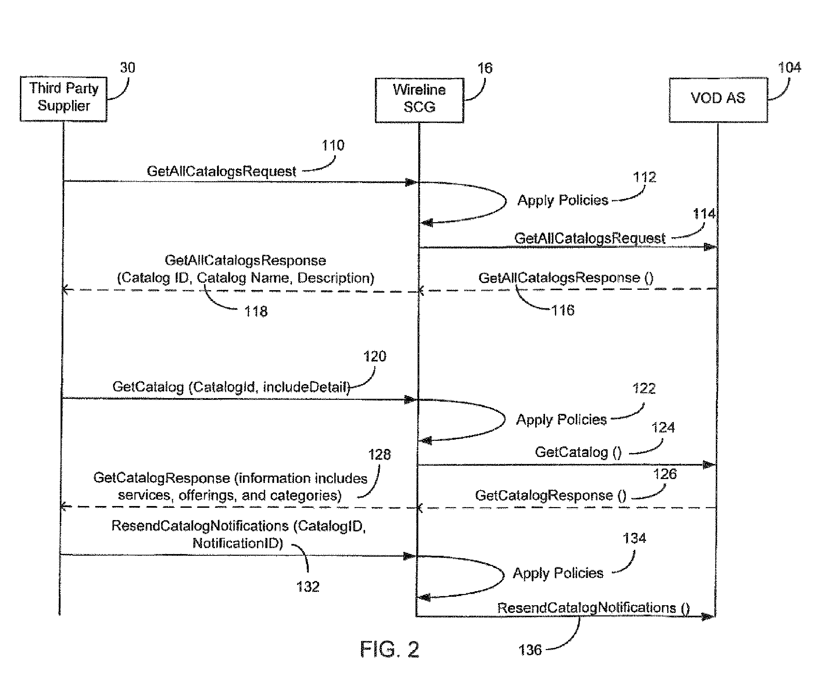

FIG. 2 is a signaling diagram illustrating messaging for obtaining a catalog in an exemplary embodiment of the present invention. Primary messaging is provided through the third-party supplier 30, the wireline SCG 16, and VOD Application Server (AS) 104. Internet Protocol Television (IPTV) Application server is an exemplary device providing EPG and PVR service enablers. The third-party supplier 30 may provide electronic content or services to its end-users. The electronic content may be video, audio, or printed material which may be downloaded or streamed to an end-user. The service may be any service which may be performed in the network. In one embodiment, the third-party supplier 30 offers an OTT service that utilizes the operator's exposed service capabilities (i.e., Application Programming Interfaces (APIs)). In FIG. 2, the third-party supplier retrieves the operator's video catalogs. The SCG 16 provides the role of the service control gateway to provide policy and access control on accessing the APIs. The VOD AS provides the VOD catalogs and associated metadata.

Referring to the example shown in FIG. 2, the third-party provider 30 sends a GetAllCatalogsRequest message 110 to the wireline SCG 16. The SCG applies policy control at 112 and forwards a GetAllCatalogsRequest message 114 to the VOD AS 104. Next, the VOD AS responds by sending a GetAllCatalogsResponse message 116 to the SCG 16. Next, the SCG 16 sends a GetAllCatalogsResponse message 118 having catalog identification, the name of the catalog and the description of the catalog to the third-party supplier 30. The message 118 may be repeated for all relevant catalogs. Next, the third-party supplier sends a GetCatalog message 120 having the catalog identification and other details sent to the wireline SCG 16. The wireline SCG 16 then performs policy control at 122 and forwards a GetCatalog message 124 to the VOD AS 104. The VOD AS 104 then sends a GetCatalogRespanse message 126 to the wireline SCG 16. The SCG then forwards the GetCatalogResponse message 128 having information on services, offerings and categories to the third-party supplier. The third-party supplier then sends a ResendCatalogNotfications message 132 with the catalog identification and notification identification information to the SCG 16. The SCG 16 then performs policy control at 134 and forwards a ResendCatalagNotifcations message 136 to the VOD AS 104.

A similar sequence may be used to obtain purchase history. The VOD catalogs and purchase history enable the third-party supplier to provide an end-user friendly search capability via a computer or other communication device. Enabling this exposed service allows the operator to gain revenue in the value chain of the OTT application. The end-user interacts with the third-party supplier to search the catalogs and set up pick lists containing desired videos at a computer. Later, the end-user may utilize a User Equipment (UE), such as a mobile phone or television, using a web interface to select an item from the list to purchase a video.

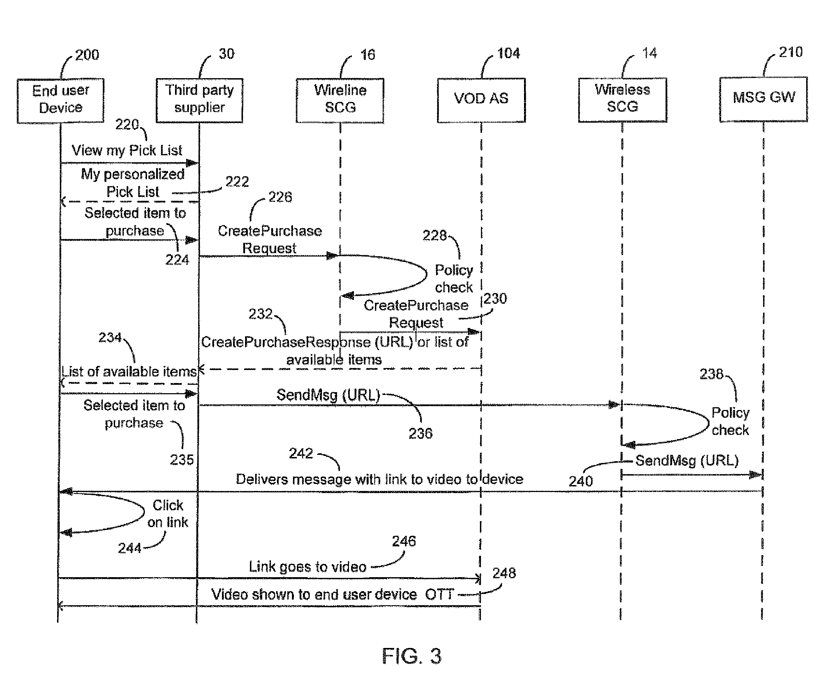

FIG. 3 is a signaling diagram illustrating messaging for selecting and purchasing video OTT in another exemplary embodiment of the present invention. FIG. 3 illustrates the messaging between a wireless end-user device or UE 200, the third-party supplier 30, the wireline SCG 16, the VOD AS 104, the wireless SCG 14, and a Messaging Gateway (MSG GW) 210. The wireline SCG 16, VOD AS 104, the wireless SCG 14, and the MSG GW 210 are operated and controlled by a service operator operating in an operator network. The end-user device 200 sends a request to view the end-user's pick list 220 (i.e., list of selections) from the third-party supplier 30. Next, the third-party supplier 30 responds by sending the end-user's personalized pick list at 222. The end-user device selects an item and sends the selection to the third-party supplier 30 at 224. The third-party supplier 30 then sends a CreatePurchaseRequest message 226 to the wireline SCG 16. The wireline SCG 16 performs a policy control check at 228 and forwards a CreatePurchaseRequest message 230 to the VOD AS 104. If the selected item is available, the VOD AS then sends a CreatePurchaseResponse (URL) message 232 to the third-party supplier 30. If the end-user device is a wireline device (e.g., a personal computer), the third-party supplier 30 forwards the item (i.e., streaming video or URL of video to the wireline end-user device. If the selected item is not available, the VOD AS 104 sends a list of unfiltered items available for purchase by the end-user device to the third-party supplier 30 which forwards the list to the end-user device at 234. The end-user device may then select an available item from the list at 235.

However, if the end-user device is connected via a wireless connection (e.g., a mobile phone), the third-party supplier 30 then responds by sending a SendMsg (URL) message 236 to the wireless SCG 14. The wireless SCG 14 then performs a policy check at 238 and forwards a SendMsg (URL) message 240 to the MSG GW 210. The MSG GW then delivers a message with a link to video to the end-user device 200 at 242. The end-user device clicks on the link at 244. Next, the link goes to the VOD AS at 246 and shows the video at 248. In one embodiment, the VOD AS may be a third-party service provider separate from the operator network or not affiliated with the operator.

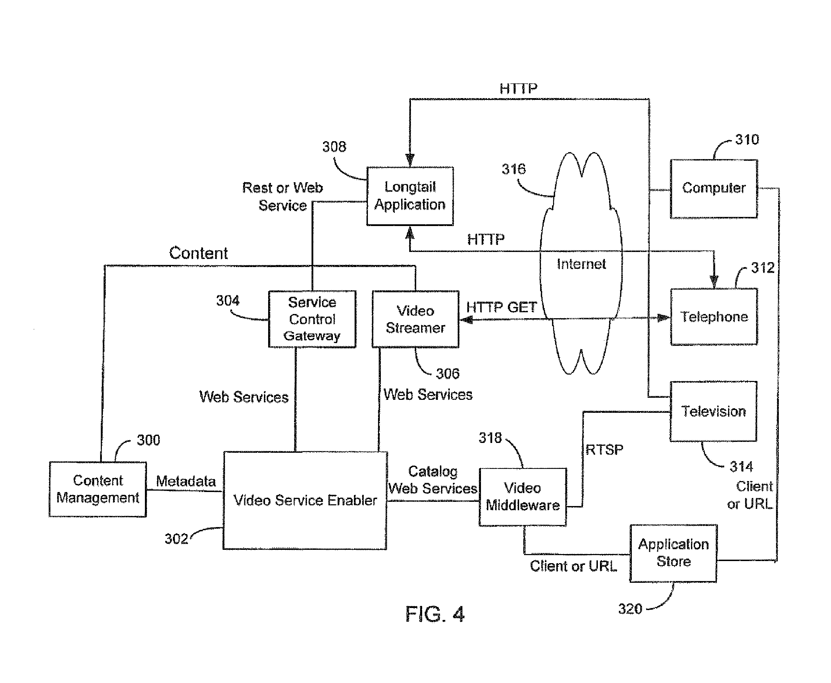

FIG. 4 is a simplified block diagram illustrating components utilized in Longtail video service enablement in an exemplary embodiment of the present invention. A content management 300 provides metadata to a video service enabler 302 and content to a video streamer 306. The video stream 306 then communicates using web services to the video service enabler 302. A SCG 304 communicates with the video service enabler 302 via web services. The VOD AS is comprised of the video streamer 306 to deliver video and the video service enabler 302 to provide the cataloges and handle the purchase of the video. A Longtail application 308 operated by a third-party supplier communicates with the SCG 304 using Rest or web services. A computer 310, telephone 312, and television 314 communicates via the Internet 316 to the Longtail Application 308. The television 314 communicates with a video middleware 318 using RTSP. The computer 310 may communicate with an Application Store 320 which communicates with the video middleware 318 using a client or URL. The video service enabler 302 provides catalog web services to the video middleware 318.

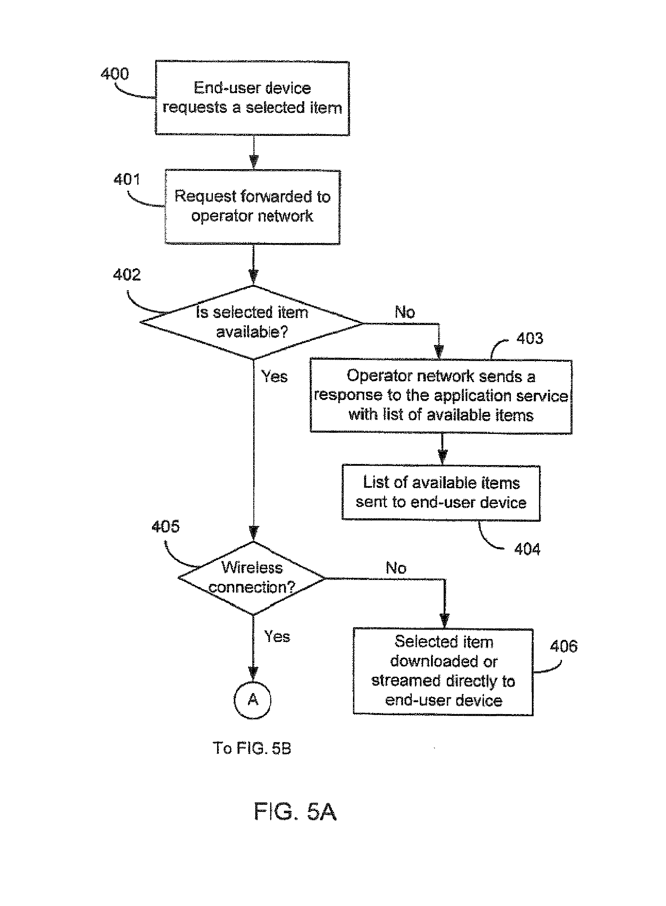

FIGs. 5A-5B are flowcharts illustrating the steps of an exemplary method of providing an end-user device with access to an identified item in a telecommunications network according to the teachings of the present invention. With reference to FIGs. 1-5, the steps of the method will now be explained. First, in step 400, an end-user device 200 sends a request to a third-party supplier 30 to purchase an item from a list of items. Next, in step 401, the request is forwarded to an operator network. The request identifies the selected item from the end-user device. Specifically, the request is sent to the wireline SCG 16. The wireline SCG then forwards the request to the VOD AS 104 in the operator network. In step 402 it is determined if the selected item is available. If it is determined the selected item is not available, the method moves to step 403 where the operator network sends a response to the third-party supplier 30 with a list of items available for purchase by the end-user device. For example, the VOD AS may send an unfiltered list of all videos available for the end-user device to purchase. Next, in step 404, the third-party supplier sends to the end-user device, the list of items available for purchase by the end-user device. The third-party supplier may filter the unfiltered list to create a filtered list of items meeting criteria established by the end-user device. This unfiltered list may be filtered by the third-party supplier in accordance to criteria previously provided by the end-user device to the third-party supplier.

If it is determined in step 402 that the selected item is available, the method moves to step 405 where it is determined if the end-user device is connected to the network via a wireless connection. If in step 405 it is determined that the end-user device is not wirelessly connected to the network (i.e., connected via a wireline), the method moves to step 406 where the selected item is directly streamed or downloaded to the end-user device.

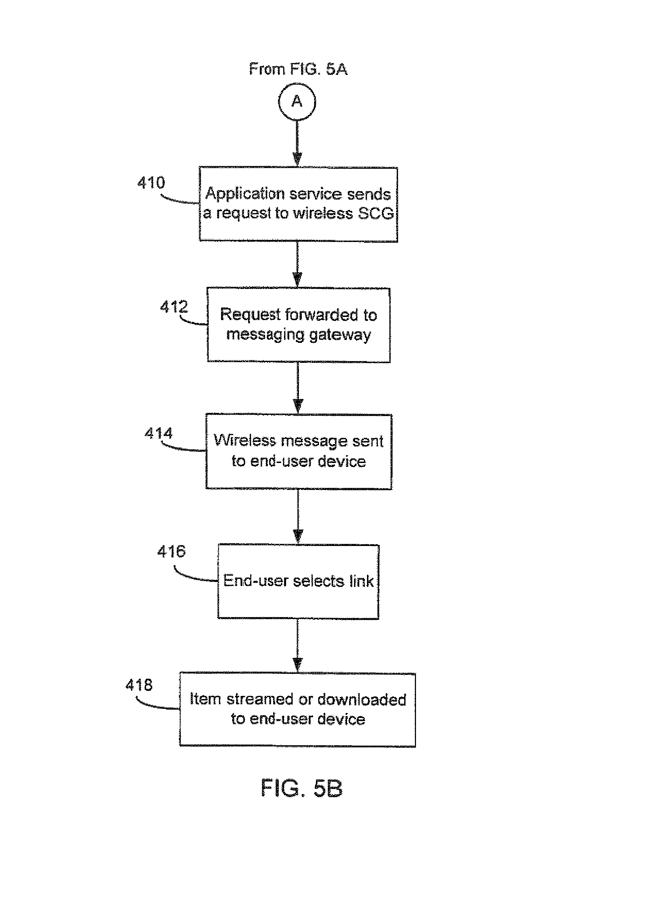

However, in step 405, if it determined that the end-user device is connected to the network via a wireless connection, the method moves to FIG. 5B, step 410 where the third-party supplier 30 sends a request to view the selected item to the wireless SCG 14. The request includes an identification of the end-user device. Next, in step 412, the request is forwarded to the wireless messaging gateway 210. In step 414, the wireless message gateway sends a wireless message to the end-user device. The wireless message includes a link to the selected video. Next, in step 416, the end-user device selects the link. In step 418, the VOD AS streams or downloads the selected item form the VOD AS to the end-user device.

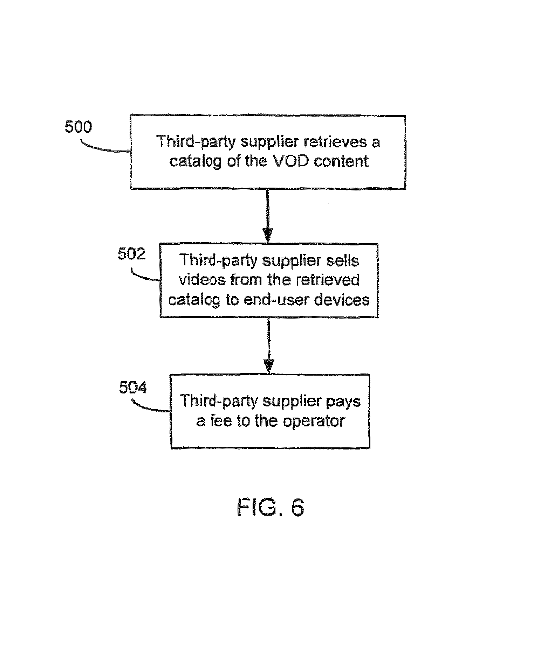

FIG. 6 is a flowchart illustrating the steps of an exemplary method of increasing sales of Video-On-Demand (VOD) content stored in a telecommunication operator network. With reference to FIGs. 1-4 and 6, the steps of the method will now be explained. The method begins in step 500, where the third-party supplier 30 retrieves a catalog of the VOD content stored in the operator network. Next, in step 502, the third-party supplier sells videos from the retrieved catalog to end-user devices. The third-party supplier may offer the VOD content for sale to end-user devices. Additionally, the third-party supplier may then receive a request from a wireless end-user device to purchase a video from the VOD content, which causes the operator network to deliver the video to the wireless end-user device. Specifically, the third-party supplier may send the purchase request to the operator network, receive an address from the operator network for the requested video at a VOD AS, and send the address for the requested video to the SCG 14. The wireless SCG 14 may then cause a messaging gateway to send a message to the wireless end-user device with a link to the address for the video. When the wireless end-user device clicks on the link, the VOD AS delivers the video to the wireless end-user device. In step 504, the third-party supplier pays a fee to the operator for each video sold by the third-party supplier.

It should be understood that a video service is exemplified. However, the present invention is not limited to video services. The present invention may be used for delivering any electronic content, such as audio or printed material, or any type of service. Thus, the present invention is not limited to a VOD AS to simply provide videos to the end-user device. Furthermore, the application server may be any server which provides any type of service or downloaded/streamed content. Furthermore, the application server may be a third-party service provider separate from the operator network.

The system and method discussed above provide many advantages. The present invention enables the delivery of OTT video service to mobile environments, such as Long Term Evolution (LTE), while including network operators in the value chain. Additionally, the present invention enables quick creation and deployment of services using exposed service capabilities. In addition, developers may create services using an operator's APIs without revealing to the developers the operator's network and organization structure.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A method of increasing sales of Video-On-Demand (VOD) content stored in a telecommunication operator network, the method comprising the steps of:
retrieving by a third-party supplier, a catalog of the VOD content stored in the operator network; and
selling by the third-party supplier, videos from the retrieved catalog to end-user devices.

2. The method according to claim 2, further comprising the third-party supplier paying a fee to the operator for each video sold by the third-party supplier.

3. The method according to claim 2, further comprising delivering purchased videos to wireless end-user devices through the operator network.

4. The method according to claim 2, wherein the step of selling videos by the third-party supplier includes:
offering by the third-party supplier, the VOD content for sale to end-user devices;
receiving by the third-party supplier, a request from a wireless end-user device to purchase a video from the VOD content; and
causing the operator network to deliver the video to the wireless end-user device.

5. The method according to claim 4, wherein the step of causing the operator network to deliver the video to the wireless end-user device includes:
sending the purchase request from the third-party supplier to the operator network;
receiving from the operator network, an address for the requested video at a VOD Application Server (AS);
sending the address for the requested video to a wireless Service Control Gateway (SCG) in the operator network, the wireless SCG causing a messaging gateway to send a message to the wireless end-user device with a link to the address for the video, wherein when the wireless end-user device clicks on the link, the VOD AS delivers the video to the wireless end-user device.

6. A method in a telecommunication network for providing an end-user device with access to an identified item, the method comprising the steps of:
receiving by a third-party supplier separate from an operator network, a request from the end-user device to purchase an item selected from a list of items stored in the operator network;
forwarding the request from the third-party supplier to the operator network, the request identifying the selected item and the end-user device; and
if the selected item is available, streaming or downloading the selected item from the operator network to the end-user device.

7. The method according to claim 6 wherein the step of forwarding the request from the third-party supplier includes forwarding the request through a wireline Service Control Gateway (SCG) operating in the operator network to an application server operating within operator network.

8. The method according to claim 7 wherein the end-user device is a wireless end-user device and the step of streaming or downloading the selected item from the operator network to the end-user device includes the step of requesting through a wireless Service Control Gateway (SCG) operating in the operator network, delivery of the selected item to the end-user device.

9. The method according to claim 8 wherein:
the application server is a video-on-demand application server (VOD AS) providing video content; and
the step of delivering the selected item through a wireless SCG includes the steps of:
forwarding the request to view the selected video from the wireless SCG to a wireless messaging gateway;
sending a wireless message from the wireless messaging gateway to the end-user device, the wireless message including a link to the selected video, the selected video being stored by the VOD AS;
receiving an indication at the VOD AS that the link has been selected at the end-user device; and
streaming or downloading the selected video from the VOD AS to the end-user device.

10. The method according to claim 6, wherein the step of streaming or downloading the selected video to the end-user device is performed over the top of the operator network.

11. The method according to claim 6 wherein the end-user device is a wireless end-user device communicating with the operator network and the third-party supplier via a wireless connection.

12. The method according to claim 6, wherein the item is a service or piece of electronic content.

13. The method according to claim 6, wherein the item is a video recording.

14. A system in a telecommunication network for providing an end-user device with access to an identified item, the system comprising:
an application server operating in a operator network for receiving a request through a third-party supplier from the end-user device to purchase an item selected from a list of items stored in the operator network;
the application server having means for forwarding the request from the third-party supplier, the request identifying the selected item and the end-user device; and
means for streaming or downloading the selected item from the operator network to the end-user device if the item is available.

15. The system according to claim 14 wherein the means for forwarding the request from the third-party supplier includes means for forwarding the request through a wireline Service Control Gateway (SCG) operating in the operator network to the application server operating within the operator network.

16. The system according to claim 15 wherein the end-user device is a wireless end-user device and the means for streaming or downloading the selected item from the operator network to the end-user device includes requesting through a wireless Service Control Gateway (SCG) operating in the operator network, delivery of the selected item to the end-user device.

17. The system according to claim 16 wherein:
the application server is a video-on-demand application server (VOD AS) providing video content;
the means for delivering the selected item through a wireless SCG includes:
means for forwarding the request to view the selected video from the wireless SCG to a wireless messaging gateway;
means for sending a wireless message from the wireless messaging gateway to the end-user device, the wireless message including a link to the selected video, the selected video being stored by the VOD AS;
means for receiving an indication at the VOD AS that the link has been selected at the end-user device; and
means for streaming or downloading the selected video from the VOD AS to the end-user device.

18. The system according to claim 14, wherein the means for streaming or downloading the selected video to the end-user device is performed over the top of the operator network.

19. The method according to claim 14 wherein the system includes means for communicating with the end-user device and the third-party supplier via a wireless connection.

20. The system according to claim 14, wherein the item is a service or piece of electronic content.

21. The system according to claim 14, wherein the item is a video recording.

22. A node in a telecommunication network for providing an end-user device with access to an identified item, the node comprising:
means for receiving requests of a selected item for a list of items stored in an operator network through a third-party provider from an end-user device;
means for forwarding the request from the third-party supplier to the operator network, the request identifying the selected item and the end-user device; and
means for streaming or downloading the selected item from the operator network to the end-user device if the item is available.

23. The node according to claim 22 wherein the end-user device is a wireless end-user device and the means for streaming or downloading the selected item from the operator network to the end-user device includes means for requesting through a wireless Service Control Gateway (SCG) operating in the operator network, delivery of the selected item to the end-user device.

24. The node according to claim 23 wherein:
the selected item is a selected video; and
the means for delivering the selected item through a wireless SCG includes:
means for forwarding the request to view the selected video from the wireless SCG to a wireless messaging gateway;
means for sending a wireless message from the wireless messaging gateway to the end-user device, the wireless message including a link to the selected video; and
means for streaming or downloading the selected video upon activation of the link by the end-user device.
